# EUROPÄISCHE PATENTSCHRIFT

(11) **EP 1 673 523 B1**
(45) Veröffentlichungstag und Bekanntmachung des Hinweises auf die Patenterteilung: **11.02.2009**
(21) Anmeldenummer: 04765855.4
(22) Anmeldetag: 06.10.2004
(51) Int. Cl.: F02B 27/02, F02D 41/22

(54) **VERFAHREN ZUR FEHLERDIAGNOSE BEI EINER IN DER SAUGROHRGEOMETRIE VARIIERBAREN SAUGANLAGE EINER BRENNFRAKFTMASCHINE**
METHOD FOR DIAGNOSING FAULTS IN AN INTAKE SYSTEM OF AN INTERNAL COMBUSTION ENGINE, WHICH HAS A VARIABLE INTAKE MANIFOLD GEOMETRY
PROCEDE POUR DIAGNOSTIQUER UN DEFAUT SUR UNE INSTALLATION D'ASPIRATION A GEOMETRIE DE TUBULURE D'ASPIRATION VARIABLE D'UN MOTEUR A COMBUSTION INTERNE

(30) Priorität: 08.10.2003 DE 10346734
(43) Veröffentlichungstag der Anmeldung: 28.06.2006
(73) Patentinhaber: Bayerische Motoren Werke Aktiengesellschaft, 80809 München (DE)
(72) Erfinder: KONRAD, Heiko, 82065 Baierbrunn (DE); KRÄMER, Gerd, 82065 Baierbrunn (DE); SCHULTE, Wolfgang, 81677 München (DE)
(86) Internationale Anmeldenummer: PCT/EP2004/011169
(87) Internationale Veröffentlichungsnummer: WO 2005/035954

(56) Entgegenhaltungen:
- EP-A- 0 521 545
- DE-A- 4 005 973
- DE-A- 19 727 669
- US-A- 5 261 369
- PATENT ABSTRACTS OF JAPAN Bd. 018, Nr. 143 (M-1574), 9. März 1994 (1994-03-09) -& JP 05 321674 A (HONDA MOTOR CO LTD), 7. Dezember 1993 (1993-12-07)

## Beschreibung

Die Erfindung betrifft ein Verfahren zur Fehlerdiagnose bei einer in der Saugrohrgeometrie variierbaren Sauganlage einer Brennkraftmaschine. Gegenüber starren Sauganlagen, deren geometrische Auslegung von Saugrohrlängen, Rohrdurchmessern oder Behältervolumina einen Kompromiss darstellen hinsichtlich der Lage und der Höhe von Drehmomenten- bzw. Leistungsmaxima, lässt sich die Volllast-Charakteristik durch erweiterte Variabilitäten optimieren. Sauganlagen mit veränderbarer Geometrie, im Folgenden variable Sauganlagen genannt, werden eingesetzt um den Drehmomentverlauf bei nicht aufgeladenen Ottomotoren zu optimieren. Ziel der variablen Sauganlagen ist es, hohe Drehmomentwerte des Motors über ein möglichst breites Drehzahlband zu erreichen. Das Prinzip variabler Sauganlagen beruht unter anderem darauf, dass sich im Saugrohr zum Beispiel eine Resonanzschwingung im angesaugten Luftmassenstrom ausbildet. Bei geeigneter Anregungsfrequenz und Phasenlage der Schwingung ergibt sich an den Einlassventilen ein signifikanter Aufladeeffekt (durch eine erhöhte Luftzufuhr), der zu einer Erhöhung des Drehmoments der Brennkraftmaschine führt.

Der Grad einer solchen Resonanzaufladung ist abhängig von der durch den Ladungswechsel der Zylinder erzeugten, drehzahlproportionalen Anregungsfrequenz und der Geometrie der Sauganlage (z.B. der Länge der Ansaugrohre oder dem Volumen der Ansauganlage, in denen/in der sich die Luftschwingung ausbildet). Die Anregungsfrequenz wird durch die bei Mehrzylindermotoren übliche, zündversetzte Überlagerung der Saug-Anregung sowie die Motordrehzahl bestimmt.

Bei Saugrohranlagen mit variierbarer Saugrohrlänge beispielsweise bildet sich eine Resonanzaufladung bei niedrigen Motordrehzahlen nur bei relativ großen Saugrohrlängen aus. Mit zunehmender Drehzahl nimmt die für eine Resonanzaufladung erforderliche Saugrohrlänge ab. Eine feste Saugrohrlänge kann somit nur auf genau einen Nenndrehzahlpunkt optimiert werden. Durch die Verstellung der Saugrohrlängen bei variierbaren Sauganlagen wird erreicht, dass sich eine Resonanzaufladung der angesaugten Luft bei mehreren Drehzahlen ausbildet, wodurch der Drehmomentverlauf des Motors insgesamt deutlich verbessert wird.

Prinzipiell lassen sich zwei Bauarten gängiger, angepasster Geometrien unterscheiden. Beiden Verfahren liegt das gemeinsame Ziel zugrunde, die Eigenfrequenz der schwingungsfähigen Gasströmung im Behälter- und Röhrensystem der Sauganlage optimal zur Drehmomentsteigerung zu nutzen.

Bei der einen Bauart wird die wirksame Länge der Einzelzylinder-Schwingrohre - und damit deren Eigenfrequenz - mit dem Ziel variiert, die Laufzeit der am offenen Rohrende reflektierten Druckwellen mit der anregenden Saugwelle bezogen auf die Ventil-Steuerzeiten zu synchronisieren. Abgestimmt auf die mit der Motordrehzahl sich ändernden effektiven Öffnungszeiten der Ventile lässt sich die Laufzeit über die Saugrohrlänge optimieren (siehe Figur 1). Ausgeführte Beispiele werden in der DE 197 28 600 C2 als einfache Schaltversion oder in der EP 0 848 145 B1 als stufenlos verstellbare Version beschrieben. Die Verstellung der Saugrohrlänge ist ein übliches Verfahren für hoch anregende Frequenzen, d.h. vor allem zur Optimierung des Leistungsmaximum.

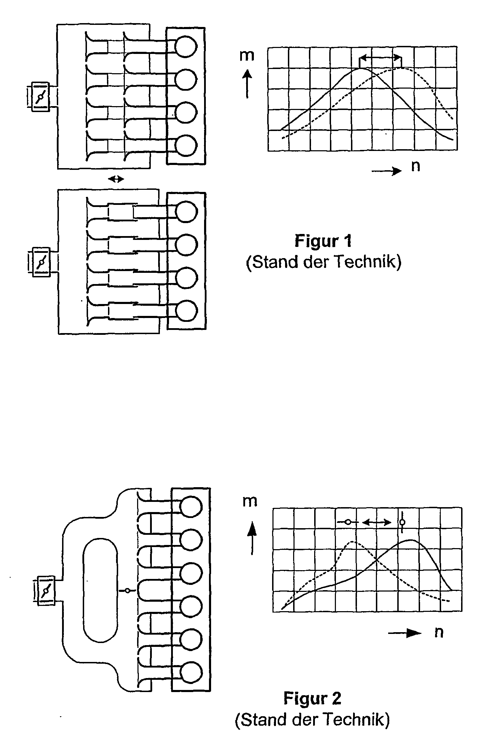

Bei der anderen Bauart wird durch Variabilitäten der Behälter-Volumina (wirksame Durchmesser oder Längen; siehe Figur 2) die Eigenfrequenz des Gesamtsystems so abgestimmt, dass es durch die anregende Gasdynamik zur Schwingungs-Resonanz kommt - vorzugsweise bei niedrigen Anregungsfrequenzen (niedrige Drehzahlen, kleine Zylinderzahl bzw. geringe Wechselwirkung der ansaugenden Zylinder untereinander). Dabei kann die charakteristische Schwingung auch über die geöffnete Drosselkappe (Volllast) hinweg über Schlauch, Luftfilter und Ansaugschnorchel hinausreichen. Einige beispielhafte Ausführungen für einen Vierzylindermotor mit einer Umschaltklappe bzw. Achtzylindermotor mit drei Umschaltklappen werden in der DE 198 03 804 A1 beschrieben. Diese sogenannte Behälter-Resonanzabstimmung wird üblicherweise mit niedriger Frequenzanregung kombiniert und zielt daher auf die Drehmomentanhebung im unteren und mittleren Drehzahlbereich.

In der Praxis überlagern sich beide Wirkmechanismen und können auch in ihrer Wirkung gezielt kombiniert werden, wie z. B. in der EP 1 105 631 B1 beschrieben. Auch Mehrfachanordnungen der Einzelwirkmechanismen sind möglich.

Üblicherweise wird die ordnungsgemäße Funktion variabler Saugrohrgeometrien überwacht, indem man im Drehzahlbereich maximaler Wirkung - also vorzugsweise bei hohen Lasten bzw. in der Volllast - die erzielte Zylinderladung mit bekannten, im Steuergerät hinterlegten Werten vergleicht. Alternativ erfolgt eine gezielte Ansteuerung zur gewollten Saugrohrverstimmung im Drehzahl- und Lastbereich mit deutlicher Wirkung und ein anschließender Vergleich der Differenzwerte von Ansteuerung ohne Verstimmung und Ansteuerung mit Verstimmung. Das Kennzeichen beider Verfahren ist die direkte oder auch indirekte Bewertung (z. B. Lambda-Verschiebung) des erwirkten Ergebnisses, d.h. der gemittelten Zylinderfüllungen. Der Nachteil liegt zum einen darin, dass der sichere Diagnosebetrieb infolge der stark wechselnden Betriebs-und Umwetbedingungen nur auf einen eng definierten Betriebsbereich des Motors beschränkt bleiben muss. Zum anderen sind Störfaktoren auf das Fahrverhalten bzw. auf die Fahrleistungen im laufenden Motorbetrieb (Online-Überwachung) unerwünschte Folgen.
Einfachere Diagnoseverfahren eignen sich derzeit nur für eine sehr ungenaue Aussage, ob ein Fehler vorliegt oder nicht. Bei elektrisch betätigten Verstellsystemen werden diese in der Regel lediglich auf antriebsseitige Fehlerquellen der Stellantriebe untersucht. Beispielsweise erfolgt eine Überprüfung auf das Vorlieben eines Kurzschlusses oder eine Endstufendiagnose der das Verstellsystem ansteuernden Endstufen.

Ein Diagnoseverfahren zur Überprüfung von Stellgliedern zur Steuerung von Brennkraftmaschinen beschreibt die DE 40 05 973 A1 in allgemeiner Weise. Bei diesem Diagnoseverfahren werden bei der Veränderung von Stellgliedern Ansteuersignale der Stellglieder erfasst und abhängig von diesen Ansteuersignalen werden in einer Diagnoseeinheit Betriebsdaten der Brennkraftmaschine, die wiederum auf die Stellgliedansteuerung mittelbar zurückzuführen sind, als Istwerte gespeichert und mit gespeicherten Sollwerten verglichen.

Ferner ist aus der DE 197 27 669 A1 ein Verfahren zur Überwachung der Funktion einer Saugrohrklappe zur Saugrohrumschaltung einer Brennkraftmaschine bekannt. Mittels diesem Verfahren wird der Saugrohrdruck für wenigstens zwei unterschiedliche Saugrohrkiappenstellungen berechnet und simultan dazu durch ein Mittel zur Erfassung des Druckes gemessen. Zur Fehlerauswertung werden die Differenzen der berechneten und der gemessenen Saugrohrdrücke bei den unterschiedlichen Saugrohrklappenstellungen gebildet und ausgewertet.

Darüber hinaus ist aus der EP 0 521 545 A2 Sauganlage bekannt, die im Einzel-Ansaugrohr jedes Zylinders ein Luft-Rückschlagventil vorsieht. Jedes Rückschlagventil wird auf seine Funktionsfähigkeit hin überwacht, indem der sich im Saugrohr einstellende Druck zwischen Rückschlagventil und Drosselklappe mit einem hinterlegten Referenzwert in Abhängigkeit von der vorliegenden Kurbelwellenposition verglichen wird.

Aus der JP 05 321674 A ist eine Sauganlage mit einem Saugrohr und einem am Saugrohr angeordneten über ein erstes Magnetventil schaltbaren Resonanzraum sowie einem im Saugrohr befindlichen über ein zweites Magnetventil schaltbaren Bypass bekannt Zur Erkennung eines Defektes bei vorstehend genannten Magnetventilen wird vorgeschlagen, die Magnetventile zu schalten und anschließen den sich einstellenden Druck im Saugrohr zu messen und mit einem zuvor abgespeicherten Referenzdruck zu vergleichen.

Der Erfindung liegt die Aufgabe zugrunde, eine weitere, insbesondere verbesserte und mit möglichst einfachen Mitteln zu realisierende Möglichkeit der Diagnose anzugeben.

Erfindungsgemäß wird die Aufgabe durch die Gesamtheit der Merkmale des Anspruchs 1 gelöst. Der Erfindung liegt die Erkenntnis zugrunde, das die Variabilitäten der Sauganlagengeometrie im wesentlichen auf der Abstimmung von Schwingungen basieren. Daher wird im Gegensatz zu einer Ergebnisbewertung vorgeschlagen, die Funktionsüberwachung auf Basis der gasdynamischen Schwingungseigenschaften - Frequenz, Phasenlage und Amplitude - zu realisieren. Dazu wird ein signifikantes Signal mit hinreichend dynamischer Auflösung mit einem geeigneten analytischen Verfahren bewertet. Als Messsignal eignen sich charakterisierende - der Gasströmung proportionale - physikalische Größen wie Luftmassenstrom, Luftmengenstrom oder auch der Saugrohrdruck. Der Messort sollte zweckmäßigerweise an den Ort bzw. in der Nähe der dynamischen Wirkung platziert werden.

Gemäß der Erfindung wird die im Saugrohr bzw. in der Sauganlage befindliche Luftmassenstromschwingung in einem vorliegenden Motordrehzahlbereich erfasst, einer Signalanalyse unterzogen und zumindest eine charakteristische Schwingungsgröße, wie Frequenz und/oder Amplitude und oder Phasenverschiebung, sowie die vorliegende Motordrehzahl beziehungsweise der gerade aktive Motordrehzahlbereich erfasst und abgespeichert. Die Luftmassenstromschwingung wird vorzugsweise über einen im Sammler der Sauganlage positionierten Absolut- oder Differenzdrucksensor ermittelt. Alternativ oder zusätzlich kann zur Erfassung der Luftmassenschwingung auch ein Luftmassenstrommesser am Eingang des Sammlers der Sauganlage angeordnet sein.
Wenn im Folgenden von Motordrehzahl die Rede ist, ist vorzugsweise auch der Fall einzelner spezieller Motordrehzahlbereiche miteinbezogen.

Die charakteristische Schwingungsgröße wird anschließend mit der der vorliegenden aktiven Motordrehzahl zugeordneten Soll-Schwingungsgröße verglichen. Die Sollschwingungsgröße kann entweder durch von Beginn an vorhandene Größen (einmalig berechnet oder über Versuche ermittelt) für eine Vielzahl zugeordneter Motordrehzahl vorgegeben oder aber durch ein vorhandenes Rechenmodell für aktuelle Betriebszustände stets neu berechnet werden. Für den Fall, dass die erfasste Luftmassenstromschwingung in einer oder mehreren charakteristischen Größen von einer vorgegebenen oder durch ein Modell nachgebildeten Referenzgröße über ein vorgegebenes Maß hinaus abweicht, kann über eine Steuereinheit eine Fehlermeldung generiert werden. Aufgrund des erfindungsgemäßen Verfahrens ist somit eine Diagnosemöglichkeit geschaffen, die mit einfachen Mitteln verschiedenste Arten von auftretenden Fehlern in einer Sauganlage detektiert. Neben elektrischen Fehlern in Verstelleinheiten der Sauganlage können hiermit auch mechanische Fehler im System, wie beispielsweise ein Verklemmen einer Verstelleinheit, ein unkorrektes Schließen von Saugrohrkanälen oder eine Schwergängigkeit der Verstellglieder diagnostiziert werden. Zusätzliche Bauteile sind für die Realisierung der Erfindung ebenfalls nicht erforderlich. Vielmehr können bereits vorhandene Sensoren, wie für die Lasterfassung verbaute hochdynamische Luftmassen- und/oder Drucksensoren, zur Erfassung der Luftmassenstromschwingungen verwendet werden und deren Daten gemäß dem erfindungsgemäßen Verfahren ausgewertet werden. Die erfasste Luftmassenstromschwingung wird hierfür einer Signalanalyse unterzogen. Auftretende Fehler in der Verstelleinheit für die Saugrohrgeometrie der Sauganlage werden durch Vergleich der Signale im Fehlerfall (erfasste fehlerhafte Signale) mit Signalen im fehlerfreien Fall (Referenz- bzw. Sollgrößen) erkannt.

Erfindungswesentlich ist, dass Resonanzschwingungen der angesaugten Luftmasse im Saugrohr beziehungsweise in der Sauganlage gemessen und ausgewertet werden. Eine Fehlererkennung kann beispielsweise durch die Signalanalyse der Schwingungsamplituden und/oder der Schwingungsfrequenz und/oder der Phasenlage des betrachteten Signals erfolgen.

Da sich die Auswirkung einer fehlerhaften Verstelleinrichtung nur in den Betriebspunkten der Brennkraftmaschine zeigt, in denen normalerweise ein Aufladeeffekt auftritt - also in den Betriebspunkten in denen eine Resonanzschwingung im Saugrohr vorliegt - kann auch nur in diesen Fällen eine zielführende Diagnose sinnvoll durchgeführt werden. Aus diesem Grund ist die Diagnose mit Vorteil nur in einem über die Motordrehzahl und/oder die Motorlast definierten Bereich frei zu schalten.

Die Diagnose kann einerseits im normalen Betrieb der Brennkraftmaschine Online-Überwachung) durchgeführt werden, wobei die je nach Betriebszustand auftretenden Signale ausgewertet werden. Um die Trennschärfe der Diagnose zu erhöhen, können die Aktuatoren zur Verstellung der Sauganlagengeometrie (z.B. Saurohrlänge) dabei auch gezielt zu Testzwecken angesteuert werden. Bei einer Testansteuerung ist zu beachten, dass die hierdurch begründeten Eingriffe in den normalen Betrieb der Brennkraftmaschine für den Benutzer in einem tolerierbaren Ausmaß bleiben.

Die Diagnose kann stattdessen oder zusätzlich auch gezielt in einem Servicebetrieb mittels einem Testgerät initiiert werden. Von Vorteil hierbei ist, dass die Betriebspunkte , in denen eine fehlerhafte Verstelleinrichtung am sichersten zu detektieren ist, genau und reproduzierbar angefahren werden können. Ferner kann in einem derartigen Servicebetrieb die Verstelleinrichtung frei und ohne Rücksicht auf Fahrbarkeitsfehler (im Fahrbetrieb könnte hierdurch beispielsweise ein nicht gewolltes Ruckeln erzeugt werden) so mit Testsignalen angesteuert werden, dass eine genaue Fehlerlokalisierung sicher gewährleistet ist.

Im Folgenden wird die Erfindung an Hand zweier Ausführungsbeispiele näher erläutert. Es zeigen:
- Figur 3:: den Druckverlauf innerhalb einer Sauganlage im fehlerfreien und im fehlerbehafteten Fall, bei einer variablen Sauganlage mit kontinuierlich veränderbarer Saugrohrlänge und
- Figur 4:: den Druckverlauf innerhalb einer Sauganlage in zwei unterschiedlichen Betriebszuständen, bei einer variablen Sauganlage mit diskret veränderbarer Saugrohrgeometrie und
- Figur 5:: die schematische Darstellung eines Flussdiagramms des erfindungsgemäßen Verfahrens zur Fehlerdiagnose bei einer variierbaren Sauganlage einer Brennkraftmaschine.

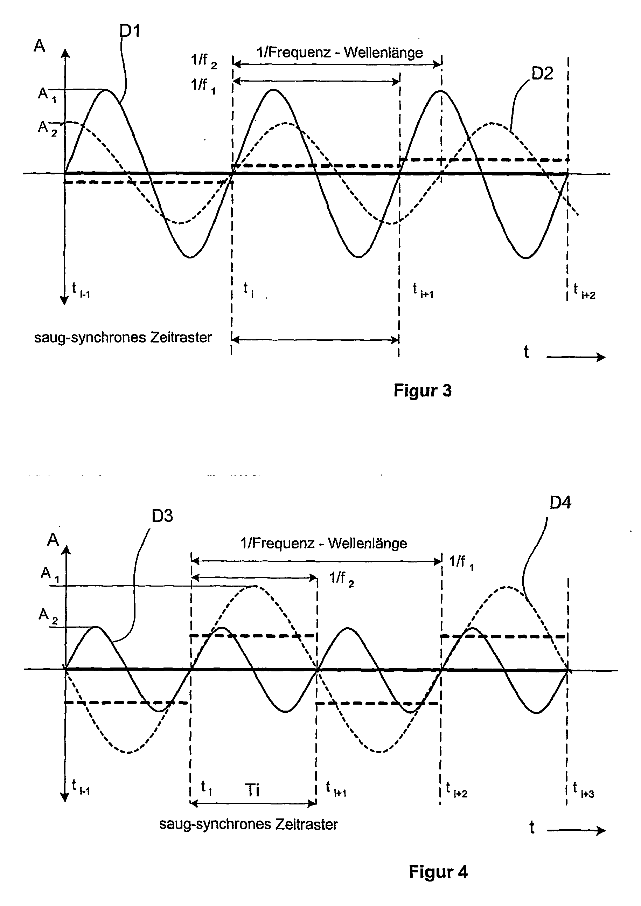

In Figur 3 sind schematisch Schwingungssignale von gemessenen Druckverläufen der im Saugrohr befindlichen Luftmassenstromschwingung einer variablen Sauganlage mit veränderbarer Saugrohrlänge dargestellt. Der Verlauf der Schwingungssignale ist stark idealisiert. Der reale Verlauf wird mitunter deutlich von den dargestellten Verläufen abweichen. Die Charakteristika wie Wellenlänge, Frequenz und Amplitude finden sich jedoch auch in allen realen Verläufen wieder. Der Schwingungsverlauf D1 stellt den Verlauf einer fehlerfreien variablen Sauganlage mit variierbarer Saugrohrlänge dar. Der optimale Schwingungsverlauf stellt sich ausschließlich bei einer für die entsprechenden Betriebsbedingungen optimal eingestellten Saugrohrlänge ein. Abweichend von der optimalen Saugrohrlänge fällt die Amplitude ab (A1 ⇒A2) und die Frequenz (f1 ⇒ f2) und Phasenlage verändern sich. Bei nicht optimaler Saugrohrlänge stellt sich ein in Frequenz, Amplitude und Phasenlage veränderter Schwingungsverlauf D2 (gestrichelt dargestellt) ein. Vergleicht man die Amplitudenmittelwerte der gemessenen Signale über ein oder mehrere saugsynchrone Zeitrasterabschnitte Ti, so bleibt der Amplitudenmittelwert im Fall der Resonanzanregung bei optimaler Saugrohrlänge konstant gleich Null (auch unabhängig von der Phasenlage bzw. dem Messort). Abweichend von der optimalen Saugrohrlänge - das heißt: im Fehlerfall, bei nicht oder nicht korrekt ausgeführter Saugrohrumschaltung - wechselt der Betrag des Mittelwertes von Zeitraster zu Zeitraster. Über eine Logikeinheit lässt sich mittels Vergleich von Soll- und Istwerten ein derartiger Fehler präzise detektieren. Anstelle einer Amplitudenmittelwertüberwachung für eine Fehlererkennung können alternativ oder zusätzlich auch Amplitude, Frequenz und/oder Phasenlage als solche überwacht werden.

Figur 4 zeigt die Schwingungssignale gemessener Druckverläufe in einer variablen Sauganlage mit veränderbarer Saugrohrgeometrie gemäß Figur 2. Diese sogenannte Saugrohrresonanzaufladung wird bevorzugt bei Mehrzylinder-Motoren mit gerader Zylinderzahl (Vier-, Sechs- Acht- oder Zwölfzylinder) genutzt. Durch einfaches Umschalten einer Resonanzklappe wird im dargestellten Beispiel die Gasdynamik eines einzigen Behältersystems (Schwingungsverlauf D3) in zwei Behältersysteme (Schwingungsverlauf D4) mit halber Zylinderzahl angeregt und somit mit halber Frequenz und vergrößerter Amplitude aufgeteilt. Wird das "geteilte" Behältervolumen auf die Eigenfrequenz der "halbierten" Saug-Anregung angepasst, so zeigt sich ein Schwingverhalten des Messsignals wie in Figur 4 idealisiert dargestellt.
Betrachtet man wiederum die Amplitudenmittelwert-Bildung bei Vollmotor-Sauganregung (geöffnete Resonanzklappe) über ein oder mehrere saugsynchrone Zeitrasterabschnitte Ti, so bleibt der Amplitudenmittelwert weitgehend konstant gleich Null. Bei "halber" - Sauganregung (geschlossene Resonanzklappe) erhält man dagegen nur dann ein derartiges Ergebnis, wenn über zwei aufeinander folgende saugsynchrone Zeitrasterabschnitte Ti (Halbierung der Sauganregung, d.h. Anregung mit nur jeden zweiten Saughub) gemittelt wird. Wird in diesem Fall nur für einen einzigen saugsynchronen Zeitrasterabschnitt Ti das Mittelungsergebnis erfasst, so wechselt der Wert - in Höhe je nach Resonanz-Amplitude - mit jedem Zeitrasterabschnitt. Ein in der Figur nicht dargestellter potentieller Phasenversatz bleibt konstant, da der Messfühler ortsgebunden ist. Bei Mittelung über saugsynchrone Zeitraster Ti bzw. deren Vielfache ist die Phasenverschiebung im resonanznahen Anregungsbereich ohnehin ohne Bedeutung.

Im Fehlerfall schaltet die Resonanzklappe nicht bzw. nicht vollständig. Anhand der Mittelungsbetrachtung kann im Resonanz-Drehzahlbereich die Wirkung somit leicht detektiert werden. Auch hier gilt, mittels geeigneter mathematischer und logischer Algorithmen lässt sich in der Steuergeräte-Software dieser Diagnosefall detektieren.

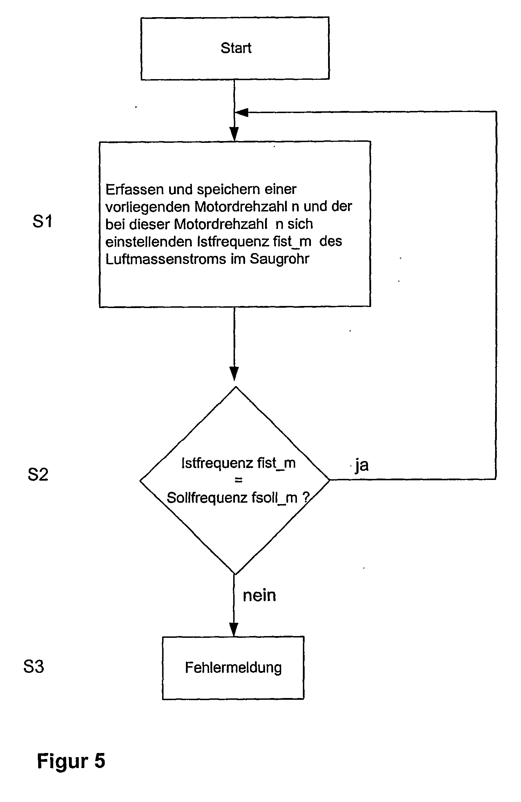

Figur 5 zeigt die schematische Darstellung eines Flussdiagramms des erfindungsgemäßen Verfahrens zur Fehlerdiagnose bei einer in der Saugrohrgeometrie variierbaren Sauganlage einer Brennkraftmaschine. Dabei wird in einem ersten Schritt S1 eine vorliegende Motordrehzahl n sowie die bei dieser Motordrehzahl n vorhandene Luftmassenstromschwingung im Saugrohr erfasst und sowohl die erfasste Motordrehzahl n als auch mindestens eine charakteristische Größe der Luftmassenstromschwingung abgespeichert. Im vorliegenden Ausführungsbeispiel ist als charakteristische Größe die Istfrequenz f_{ist_m} der Luftmassenstromschwingung erfasst und abgespeichert worden. Die erfasste Istfrequenz f_{ist_m} wird in einem zweiten Schritt S2 mit einer Referenzgröße in Form einer Sollfrequenz f_{soll_m} verglichen und in Abhängigkeit von diesem Vergleich bei entsprechender Abweichung der Vergleichsgrößen voneinander eine Fehlermeldung in einem anschließenden Schritt S3 generiert. Für den stattfindenden Vergleich zwischen erfasster charakteristischer Größe und der Sollgröße sind vorzugsweise in einer Steuereinheit bereits für eine Vielzahl von Drehzahlen n oder Drehzahlbereichen feste Vergleichsgrößen (Frequenzen und/oder Amplituden und/oder Phasenwinkel) hinterlegt. Die festen Vergleichsgrößen sind in der Regel durch eine Vielzahl aufwendiger Versuchsreihen im Vorfeld der Entwicklung ermittelt worden. Anstelle fest hinterlegter Vergleichsgrößen können diese auch während des Betriebs der Brennkraftmaschine mittels einem Modell anhand der vorliegenden stets neu berechnet werden.
In einer anderen Ausführung kann ebenso alternativ oder zusätzlich zur Frequenz die Amplitude oder Phase der Luftmassenstromschwingung erfasst und abgespeichert und als Vergleichsgröße(n) herangezogen werden.

## Patentansprüche

1. Verfahren zur Fehlerdiagnose bei einer in der Saugrohrgeometrie variierbaren Sauganlage einer Brennkraftmaschine, wobei durch Variieren der Saugrohrgeometrie erreicht wird, dass sich eine Resonanzschwingung in der Sauganlage bei mehreren Drehzahlen ausbildet, umfassend folgende Verfahrensschritte:
- die im Saugrohr befindliche Luftmassenstromschwingung wird bei einer Motordrehzahl (n) erfasst, bei der ein fehlerfreies System eine Resonanzschwingung im Saugrohr zur Folge hätte,
- die erfasste Luftmassenstromschwingung wird einer Signalanalyse unterzogen und zumindest eine charakteristische Ist-Schwingungsgröße (f_{ist_m}) sowie die vorliegende Motordrehzahl (n) abgespeichert,
- die charakteristische Ist-Schwingungsgröße (f_{ist_m}) wird mit einer der vorliegenden Motordrehzahl (n) zugeordneten Soll-Schwingungsgröße (f_{soll_m}) verglichen.

2. Verfahren nach Anspruch 1, **dadurch gekennzeichnet, dass** die Soll-Schwingungsgröße (f_{soll_m}) über ein hinterlegtes Modell kontinuierlich für eine Vielzahl auftretender Motordrehzahlen (n) stets neu berechnet wird.

3. Verfahren nach Anspruch 1, **dadurch gekennzeichnet, dass** die Soll-Schwingungsgröße (f_{soll_m}) für eine Vielzahl von Motordrehzahlen (n) insbesondere versuchstechnisch ermittelt und unveränderlich einmalig hinterlegt ist.

4. Verfahren nach einem der vorstehenden Ansprüche, **dadurch gekennzeichnet, dass** als Schwingungsgröße die Frequenz und/oder Amplitude der Luftmassenstromschwingung herangezogen werden.

## Claims

1. A method for diagnosing faults in an intake system with variable intake manifold geometry, of an internal combustion engine, wherein, by varying the intake manifold geometry, it is achieved that a resonance vibration is formed in the intake system at a plurality of rotational speeds, comprising the following method steps:
- the air mass flow vibration located in the intake manifold is detected at an engine speed (n), at which a fault-free system would result in a resonance vibration in the intake manifold,
- the air mass flow vibration detected is subjected to a signal analysis and at least one characteristic actual vibration variable (f_{actual_m}) and the present engine speed (n) are stored,
- the characteristic actual vibration variable (f_{actual_m}) is compared with a desired vibration variable (f_{desired_m}) associated with the present engine speed (n).

2. A method according to claim 1, **characterised in that** the desired vibration variable (f_{desired_m}) is constantly recalculated continuously for a plurality of occurring engine speeds (n) by means of a stored model.

3. A method according to claim 1, **characterised in that** the desired vibration variable (f_{desired_m}) is determined for a plurality of engine speeds (n), more especially empirically, and is stored unchangeably once.

4. A method according to any one of the preceding claims, **characterised in that** the frequency and/or amplitude of the air mass flow vibration are used as the vibration variable.

## Revendications

1. Procédé pour diagnostiquer un défaut sur une installation d'aspiration d'un moteur à combustion interne et dont la tubulure d'aspiration est à géométrie variable selon lequel, en modifiant la géométrie de la tubulure d'aspiration, on développe une oscillation de résonnance dans l'installation d'aspiration pour plusieurs vitesses de rotation, le procédé comprenant les étapes suivantes :
- on saisit l'oscillation du flux massique d'air dans la tubulure d'aspiration pour une vitesse de rotation (n) du moteur pour laquelle un système sans défaut générait une oscillation de résonnance dans la tubulure d'aspiration,
- on soumet l'oscillation saisie du flux massique d'air à une analyse de signal et on mémorise au moins une grandeur réelle caractéristique d'oscillation (f_{ist_m}) ainsi que la vitesse de rotation (n) correspondante du moteur,
- on compare la grandeur réelle caractéristique de l'oscillation (f_{ist_m}) à une grandeur d'oscillation de consigne (f_{soll_m}) associée à la vitesse de rotation (n) correspondante du moteur.

2. Procédé selon la revendication 1,
**caractérisé en ce que**
la grandeur d'oscillation de consigne (f_{soll_m}) est toujours recalculée en continu pour un grand nombre de vitesses de rotation (n) du moteur produites par l'intermédiaire d'un modèle enregistré.

3. Procédé selon la revendication 1,
**caractérisé en ce qu'**
on détermine la grandeur d'oscillation de consigne (f_{soll_m}) pour un grand nombre de vitesses de rotation (n) du moteur notamment par des essais techniques et on l'enregistre une seule fois de manière définitive.

4. Procédé selon les revendications précédentes,
**caractérisé en ce que**
comme grandeurs d'oscillation, on utilise la fréquence et/ou l'amplitude de l'oscillation du flux massique d'air.
